# EUROPÄISCHE PATENTANMELDUNG

(11) **EP 4 071 955 A1**
(43) Veröffentlichungstag der Anmeldung: **12.10.2022**
(21) Anmeldenummer: 21167606.9
(22) Anmeldetag: 09.04.2021
(51) Int. Cl.: H02J 3/00, H02H 7/04, H02H 7/26

(54) **SCHALTANORDNUNG UND VERFAHREN ZUM ZUSCHALTEN EINER STROMERZEUGUNGSANLAGE ZU EINEM STROMVERTEILERNETZ UND ZUM TRENNEN VON DIESEM**

(71) Anmelder: Moser, Jürgen, 79365 Rheinhausen (DE)
(72) Erfinder: Moser, Jürgen, 79365 Rheinhausen (DE)
(74) Vertreter: Schultz, Gerrit

(57) **Zusammenfassung**

Die Erfindung betrifft eine Schaltanordnung (1) und ein Verfahren zum Verbinden einer Stromerzeugungsanlage (2) mit einem Stromverteilernetz (3) und zum Trennen von diesem, wobei ein Transformator (4) zum Umtransformieren der sekundärseitigen Erzeugerspannung auf die primärseitige Netzspannung oberhalb von 1 kV ausgebildet ist, dadurch gekennzeichnet, dass zwischen dem Transformator (4) und einem Übergabeschalter (7) in der Spannungsleitung (18, 21) ein als Schütz (8) ausgebildeter Stromschalter ausgebildet ist.

## Beschreibung

Die Erfindung betrifft eine Schaltanordnung zum Zuschalten einer mit einer Erzeugerspannung betriebenen Stromerzeugungsanlage zu einem mit einer Netzspannung oberhalb von 1 kV betriebenen Stromverteilernetz und zum Trennen von diesem, wobei ein Transformator zum Umtransformieren der sekundärseitigen Erzeugerspannung auf die primärseitige Netzspannung ausgebildet ist und wobei primärseitig der Transformator über eine Spannungsleitung mit einem Übergabeschalter, der die Stromerzeugungsanlage mit dem Stromverteilernetz verbindet, verbunden ist. Eine solche Schaltanordnung findet in der Praxis Anwendung.

Die Netzspannung kann eine Mittel-, Hoch- und/oder Höchstspannung sein. Unter einer Mittelspannung wird eine Spannung zwischen 1kV und 60 kV bezeichnet, bevorzugt eine Spannung zwischen 10kV und 30kV, besonders bevorzugt eine Spannung zwischen 18-22kV. Unter Hochspannung wird eine Spannung zwischen 60 kV und 150 kV bezeichnet. Unter Höchstspannung wird eine Spannung zwischen 150 kV und 1000 kV bezeichnet.

Die Erfindung betrifft weiter ein Verfahren zum Zuschalten einer Stromerzeugungsanlage zu einem mit einer Netzspannung oberhalb von 1 kV betriebenen Stromverteilernetz und zum Trennen der Stromerzeugungsanlage von dem Stromverteilernetz, wobei eine Erzeugerspannung der Stromerzeugungsanlage mittels eines Transformators auf die Netzspannung umtransformiert wird und wobei primärseitig der Transformator über eine Spannungsleitung mit einem Übergabeschalter, der die Stromerzeugungsanlage mit dem Stromverteilernetz verbindet, verbunden ist. Ein solches Verfahren ist bekannt.

Der Erfindung liegt die Aufgabe zugrunde, einen zuverlässigen, wartungsarmen und energieeffizienten Betrieb von Stromerzeugungsanlagen, die Energie in ein Stromverteilernetz einspeisen, zu schaffen.

Zur Lösung dieser Aufgabe schlägt die Erfindung die Merkmale von Anspruch 1 vor. Insbesondere wird somit erfindungsgemäß bei einer Schaltanordnung der eingangs beschriebenen Art zur Lösung der genannten Aufgabe vorgeschlagen, dass zwischen dem Transformator und dem Übergabeschalter in der Spannungsleitung ein als Schütz ausgebildeter Stromschalter ausgebildet ist. Das Stromverteilernetz kann mit einer Netzspannung oberhalb von 1 kV betrieben werden. Vorteilhaft ist, wenn die Netzspannung eine Hochspannung oder Höchstspannung ist. Besonders vorteilhaft ist, wenn die Spannung eine Mittelspannung ist. Vorteilhaft ist, wenn das Stromverteilernetz ein Mittelspannungsnetz ist. Vorteilhaft ist, wenn die Spannungsleitung eine Mittelspannungsleitung ist. Vorteilhaft ist, wenn das Stromverteilernetz ein Mittelspannungsnetz ist.

Mit der Schaltanordnung kann eine Stromerzeugungsanlage und daher genau eine oder auch mehr als eine Stromerzeugungsanlage zugeschaltet oder getrennt werden.

Die erfindungsgemäße Ausbildung eines Schützes zwischen dem Transformator und dem Übergabeschalter in der Spannungsleitung hat den Vorteil, dass die Stromerzeugungsanlage häufiger von dem Stromverteilernetz getrennt und wieder zugeschaltet werden kann, bevor ein mechanisches oder elektrisches Versagen der Schaltorgane eintritt. Durch die Erhöhung der maximalen Anzahl von möglichen Schaltzyklen kann somit die Lebensdauer und Zuverlässigkeit der gesamten Anlage und der zugehörigen elektrischen Komponenten erhöht und gleichzeitig Kosten gespart werden.

Bisher werden Stromerzeugungsanlagen über für Netzspannungen oberhalb von 1 kV, insbesondere für Mittelspannungen, ausgelegte Leistungsschalter zu Stromverteilernetzen hinzugeschaltet oder von diesen getrennt. Leistungsschalter sind mechanisch komplexer aufgebaut als Schütze und haben zudem eine Schutzlogik und Schutzmechanik. Die primäre Funktion eines Leistungsschalters ist der Netzschutz bei Fehlern wie Kurzschluss, eingestellten Überstrom oder Erdschluss. Der Schaltvorgang erfolgt in der Regel, indem Energie in einem Federelement gespeichert wird. Das Federelement kann mittels einer Bestromung einer Spule definiert ausgelöst werden und gibt die gespeicherte Energie in kurzer Zeit ab. Dies führt in der Praxis dazu, dass Leistungsschalter bereits nach einigen tausend Schaltungen nicht mehr zuverlässig funktionieren und aufwändig gewartet oder ersetzt werden müssen.

So ist insbesondere der Übergabeschalter als Leistungsschalter ausgebildet. Der Übergabeschalter befindet sich üblicherweise in der Verfügungsmacht des Netzbetreibers. Es kann daher bei einem Ausfall des Übergabeschalters zu erheblichen Einspeisungsverlusten des Betreibers der Stromerzeugungsanlage führen. Leistungsschalter finden sich in der Regel auch in dem lokalen Betreibernetz der Stromerzeugungsanlage. Diese Schalter finden sich häufig in Schaltschränken. Diese Leistungsschalter bilden eine weitere Quelle für Einspeisungsverluste des Betreibers der Stromerzeugungsanlage.

Die Erfindung hat nun erstmals erkannt, dass das zusätzliche Vorsehen eines Schützes die Leistungsschalter entlasten kann, wodurch die Zuverlässigkeit der Energieeinspeisung verbessert werden kann.

Ein Schütz ist mechanisch sehr viel einfacher ausgebildet als ein Leistungsschalter. Ein Schütz weist üblicherweise eine Spule und einen Anker auf. Der Anker kann durch Bestromung der Spule bewegt werden und kann auf diese Weise den Schaltvorgang auslösen. Ein Schütz kann daher sehr viel häufiger geschaltet werden als ein Leistungsschalter, bevor dieser ausfällt oder gewartet werden muss. Allerdings fehlen einem Schütz Schutzfunktionen, die für den Betrieb einer Stromerzeugungsanlage unerlässlich sind. Daher ist erfindungsgemäß vorgesehen, dass zusätzlich zu dem Übergabeschalter und möglichen weiteren Leistungsschaltern ein Schütz vorgesehen ist. Die Leistungsschalter ermöglichen es, dass die Stromerzeugungsanlage hinreichend sicher betrieben werden kann, während der Schütz es ermöglicht, die Stromerzeugungsanlage häufig zu dem Stromverteilernetz hinzuzuschalten und wieder von diesem zu trennen, ohne dass es zu einem problematischen Verschleiß der Schaltorgane kommt.

Bevorzugt ist das Schütz ein für Netzspannungen oberhalb von 1 kV ausgelegter Schütz. Besonders bevorzugt ist das Schütz ein für Mittelspannungen ausgelegter Schütz.

Die erfindungsgemäße Schaltanordnung ist insbesondere für solche Fälle von Vorteil, bei denen die Stromerzeugungsanlage häufig vom Stromverteilernetz getrennt werden soll. Die Erfindung kommt daher besonders zum Tragen, wenn die Stromerzeugungsanlage nicht der Deckung der Grundlast dient. Dies sind vorzugsweise Anlagen, welche kurzfristig, vorzugsweise innerhalb weniger Minuten oder Stunden, und temporär zugeschaltet werden können, um Stromanforderungen, die über die Grundlast hinausgehen, zu decken. Dies können beispielsweise Solaranlagen, Windkraftanlagen oder Pumpspeicheranlagen sein. Diese können zyklisch und/oder nach kurzfristigem Bedarf und/oder in Abhängigkeit von äußeren Umweltbedingungen wie etwa bei Sonnenschein oder ausreichendem Wind Strom erzeugen. Die Stromerzeugungsanlage ist daher bevorzugt eine Nicht-Grundlast-Kraftanlage und/oder eine Stromerzeugungsanlage, die zur Deckung der Spitzenlast geeignet ist. Die Erfindung kann auch bei Grundlastkraftwerken, die möglichst ununterbrochen betrieben werden, wie etwa bei Atomkraftwerken, Kohlekraftwerken, Gaskraftwerken, Erdölkraftwerken oder Laufwasserkraftwerken eingesetzt werden, sie ist allerdings besonders vorteilhaft bei Anlagen, die nicht permanent Strom in das Stromnetz einspeisen.

Eine Solaranlage kann dadurch charakterisiert sein, dass sie Solarenergie in elektrische, thermische oder mechanische Energie umwandeln kann, wie etwa eine Photovoltaikanlage oder ein Sonnenwärmekraftwerk.

Wird die Stromerzeugungsanlage nicht benötigt, beispielsweise weil bei einer als Photovoltaikanlage ausgebildeten Solaranlage die Sonne untergegangen ist, ist es von Vorteil, die Stromerzeugungsanlage vom Stromverteilernetz zu trennen. Bleibt die Stromerzeugungsanlage nämlich am Stromnetz angeschlossen, so verbrauchen zur Aufrechterhaltung des magnetischen Flusses die Transformatoren, die den Strom von der Stromerzeugungsanlage auf die Netzspannung transformieren, weiterhin Strom, der eingespart werden kann, wenn die Stromerzeugungsanlage vom Stromverteilernetz getrennt wird. Aktuell bleiben Solaranlagen auch in der Nacht an dem Stromverteilernetz, was sich daher negativ auf die Wirtschaftlichkeit der Anlage auswirkt. Da durch die Erfindung die Schaltorgane geschont werden, wird ermöglicht, die Energieerzeugungsanlage nahezu verschleißfrei von dem Stromnetz zu trennen, was sich positiv auf die Wirtschaftlichkeit der Stromerzeugungsanlage auswirkt. Entsprechende Vorteile können bei anderen Nicht-Dauerbetriebsstromanlagen erzielt werden. Die Schaltorgane derartiger Stromerzeugungsanlagen unterliegen nämlich auch bei diesen erhöhtem Verschleiß, sodass die Erfindung bei diesen in besonderem Maß zum Tragen kommen kann.

Das Schütz wird bevorzugt nach dem Sanftstart des Transformators geschlossen. Im geöffneten Zustand kann das Schütz die gesamte Stromerzeugungsanlage vom Stromverteilernetz trennen.

Bei einer vorteilhaften Ausgestaltung kann vorgesehen sein, dass eine Sanfteinschaltvorrichtung zum Sanfteinschalten des Transformators ausgebildet ist. Dies hat den Vorteil, dass der Transformator beim Einschalten, bei dem ohne einen Sanftstart erhebliche Stromspitzen auftreten können, geschont wird. Die Kombination aus Schütz und Sanfteinschaltung des Transformators ermöglicht daher ein nahezu verschleißfreies Zuschalten und Trennen der Stromerzeugungsanlage.

Das Sanfteinschalten erfolgt bevorzugt durch induktives Vormagnetisieren des Transformatorkerns. Diese Art der Vormagnetisierung ist von Vorteil, da hier lediglich Blindleistung und keine Verlustleistung auftritt; letztere tritt hingegen bei einem Sanfteinschalten mittels Widerständen auf. Das induktive Vormagnetisieren hat ferner den Vorteil, dass eine Erwärmung der Sanfteinschaltvorrichtung vermieden wird, dass keine Abkühlzeiten notwendig sind und dass die Sanfteinschaltvorrichtung sofort wieder zuschaltbar ist.

Die Sanfteinschaltvorrichtung kann über eine Stromleitung mit der Spannungsleitung verbunden sein. In diesem Fall kann die Sanfteinschaltvorrichtung insbesondere ein Signal über die Phasenlage von der Spannungsleitung erhalten. Auch kann vorgesehen sein, dass die Sanfteinschaltvorrichtung mit Energie aus der Spannungsleitung versorgt wird. Die Sanfteinschaltvorrichtung ist bevorzugt sekundärseitig oder primärseitig an den Transformator angeschlossen.

Die Sanfteinschaltvorrichtung kann daher unter anderem die Aufgabe erfüllen, eine korrekte Magnetisierung des Transformatorkerns zu gewährleisten und/oder die Phasenlage am geöffneten Schütz abzugleichen, sodass keine Spannung an den beiden Anschlüssen des Schützes abfällt.

Primärseitig bezieht sich in diesem Zusammenhang auf die Spannungsseite, welche sich zwischen Transformator und Stromverteilernetz befindet. Diese kann mit einer Spannung oberhalb von 1 kV betrieben werden.

Sekundärseitig bezieht sich in diesem Zusammenhang auf die Spannungsseite, welche sich zwischen dem Transformator und der Stromerzeugungsanlage befindet. Diese kann mit einer von der Stromerzeugungsanlage erzeugten Erzeugerspannung betrieben werden. Die Erzeugerspannung kann beispielsweise zwischen 400 Volt und 690 Volt betragen, insbesondere 400 Volt oder 690 Volt. Typischerweise wird die Erzeugerspannung unterhalb der Netzspannung liegen. Die Erzeugerspannung wird dann mittels des Transformators auf die Netzspannung hochtransformiert. Der Transformator ist dann entsprechend zum Hochtransformieren ausgebildet. Allerdings kann in besonderen Situationen die Erzeugerspannung auch oberhalb der Netzspannung liegen. Die Erzeugerspannung wird dann mittels des Transformators auf die Netzspannung heruntertransformiert. Der Transformator ist dann entsprechend zum Heruntertransformieren ausgebildet. Beispielsweise kann die Erzeugerspannung oder Einspeisung auch Mittelspannung oder Hoch- oder Höchstspannung sein. Das Übersetzungsverhältnis kann entsprechend angepasst werden durch Umtransformieren auf die Netzspannung und geeigneter Auslegung des Transformators.

Bei Vorhandensein mehrerer Transformatoren kann es ausreichen, wenn die Sanfteinschaltvorrichtung lediglich an einem von den mehreren Transformatoren ausgebildet ist, da die restlichen Transformatoren im System ebenfalls miteinander verbunden sind und somit ebenfalls sanfteingeschaltet werden, wenn der Transformator sanfteingeschaltet wird, an dem die Sanfteinschaltvorrichtung ausgebildet ist.

Ein Stromanschlussstrang einer Stromerzeugungsanlage, an dessen Transformator eine oder die Sanfteinschaltvorrichtung angeschlossen ist, kann als Masteransschlussstrang bezeichnet werden.

Der weitere oder die übrigen Stromanschlussstränge der Stromerzeugungsanlage können als Slaveanschlussstränge bezeichnet werden. Ein Slaveanschlussstrang kann dadurch charakterisiert sein, dass die Sanfteinschaltvorrichtung nicht an dessen Transformator angeschlossen ist. Aufgrund der Kopplung von Masteranschlussstrang und Slaveanschlussstrang kann das Sanfteinschalten des Transformators des Masteranschlussstrangs zugleich ein Sanfteinschalten des Transformators eins Slaveanschlussstrangs bewirken.

Mit einem Stromanschlussstrang wird eine Stromerzeugungsanlage mit dem Stromverteilernetz verbunden.

In einer weiteren Ausgestaltung kann vorgesehen sein, dass die Sanfteinschaltvorrichtung mit einem Hilfsnetz verbunden ist, wobei das Hilfsnetz mit einer Spannung unterhalb der Mittelspannung, vorzugsweise mit der Erzeugerspannung betrieben wird. Besonders bevorzugt ist die Sanfteinschaltvorrichtung in diesem Fall sekundärseitig an den Transformator angeschlossen. Das Hilfsnetz kann das Netz der Stromerzeugungsanlage sein. Dies bietet den Vorteil, dass die Sanfteinschaltvorrichtung nicht mit einem Transformator ausgestattet sein muss, und dass somit Kosten gespart werden.

Alternativ kann vorgesehen sein, dass das Hilfsnetz das öffentliche Niederspannungsnetz ist. Dieses wird üblicherweise mit weniger als 500 V, häufig mit 230 V bzw. dreiphasig mit 400 V betrieben.

Die Sanfteinschaltvorrichtung und/oder das Schütz kann für ein breites Spannungsintervall ausgelegt sein, insbesondere zum Sanfteinschalten zu sämtlichen Spannungen zwischen 1 kV und 1000 kV, bevorzugt zu sämtlichen Spannungen im Mittelspannungsbereich. Die Sanfteinschaltvorrichtung kann ferner für ein breites Spektrum von Transformatorleistungen ausgelegt sein. Dies hat den Vorteil, dass die beschriebene Schaltanordnung flexibel für unterschiedliche Netzspannungen und Transformatorleistungen verwendet werden kann.

Bei einer weiteren vorteilhaften Ausgestaltung kann vorgesehen sein, dass Mittel zum Erkennen der Phasenlage der Netzspannung des Stromverteilernetzes ausgebildet sind. Es kann insbesondere vorgesehen sein, dass mit den Mitteln eine Phasendifferenz zwischen den Phasen der Netzspannung gemessen werden kann, die vor und nach dem Schütz an der Spannungsleitung anliegen. Bevorzugt ist vorgesehen, dass Mittel zum Erkennen einer Phasendifferenz an Anschlüssen des Schützes ausgebildet sind. Die erkannte Phasenlage kann dazu genutzt werden, um den Transformator mit dem Stromverteilernetz zu synchronisieren. Dies kann für einen Sanftstart des Transformators wichtig sein, da durch die Synchronisierung Stromspitzen beim Einschalten des Transformators durch Schließen des Schützes verhindert werden. Die Mittel zum Erkennen der Phasenlage können auch vorsehen, dass eine Phasendifferenz ermittelt wird zwischen der Phase der primärseitigen Netzspannung des Stromverteilernetzes und der Phase der von der Stromerzeugungsanlage erzeugten Spannung auf der Sekundärseite des Transformators.

Zur Lösung der genannten Aufgabe sind erfindungsgemäß die Merkmale des auf ein Verfahren zum Zuschalten einer Stromerzeugungsanlage zu einem Stromverteilernetz und zum Trennen von diesem gerichteten nebengeordneten Anspruchs vorgesehen. Insbesondere wird zur Lösung der genannten Aufgabe somit erfindungsgemäß bei einem Verfahren der eingangs beschriebenen Art vorgeschlagen, dass zum Zuschalten der Stromerzeugungsanlage zum Stromverteilernetz und zum Trennen der Stromerzeugungsanlage von dem Stromverteilernetz ein als Schütz ausgebildeter und zwischen dem Übergabeschalter und dem Transformator ausgebildeter Stromschalter geschaltet wird. Wie bereits zuvor beschrieben erlaubt dies einen nahezu verschleißfreien, wartungsfreien und energieeffizienten Betrieb der Stromerzeugungsanlage. Vorteilhaft kann sein, wenn das Stromverteilernetz ein Mittelspannungsnetz ist.

In einer weiteren vorteilhaften Ausgestaltung kann vorgesehen sein, dass vor dem Zuschalten der Stromerzeugungsanlage zum Stromverteilernetz ein Transformator mittels einer Sanfteinschaltvorrichtung sanfteingeschaltet wird. Dies hat den Vorteil, dass mit dieser Vorrichtung Stromspitzen beim Einschalten des Transformators verhindert werden und somit in Kombination mit dem Zuschalten durch den Schütz die Anzahl der wartungsfreien Schaltzyklen der Stromerzeugungsanlage und deren Schaltanlagen erheblich erhöht werden kann.

In einer weiteren vorteilhaften Ausgestaltung kann vorgesehen sein, dass nach dem Zuschalten der Stromerzeugungsanlage die Sanfteinschaltvorrichtung deaktiviert wird. Hierdurch wird die Energieeffizienz der Anlage verbessert und ein Verschleiß weiter reduziert.

In einer weiteren vorteilhaften Ausgestaltung kann vorgesehen sein, dass eine Phasenlage des Stromverteilernetzes ermittelt wird und dass der Transformator synchron mit der Phasenlage sanfteingeschaltet wird. Hierdurch können schädliche Stromspitzen beim Einschalten des Transformators verhindert werden, wodurch dieser geschont wird, sodass in Kombination mit einem Zu- und Abschalten durch den Schütz die wartungsfreien Schaltzyklen der Energieerzeugungsanlage erhöht werden.

In einer weiteren vorteilhaften Ausgestaltung kann vorgesehen sein, dass die Sanfteinschaltvorrichtung aus einem Strom gespeist wird, der zwischen dem Übergabeschalter und dem Schütz abgegriffen wird. Dies ermöglicht eine Versorgung der Sanfteinschaltvorrichtung mit Strom auch für den Fall, dass der Schütz geöffnet ist.

Die Stromversorgung der Sanfteinschaltvorrichtung kann auch dann sichergestellt sein, wenn vorgesehen ist, dass die Sanfteinschaltvorrichtung aus einem Hilfsnetz gespeist wird, das eine Spannung unterhalb der Mittelspannung, insbesondere die Erzeugerspannung, aufweist. Das Hilfsnetz kann hierbei insbesondere das Netz der Stromerzeugungsanlage oder das öffentliche Niederspannungsnetz sein.

In einer weiteren vorteilhaften Ausgestaltung kann vorgesehen sein, dass ein Wert einer Stromerzeugungsgröße der Stromerzeugungsanlage mithilfe eines Sensors gemessen wird und dass das Schütz in Abhängigkeit von einem Kriterium geschaltet wird, wobei das Kriterium den gemessenen Wert einschließt. Beispielsweise kann vorgesehen sein, dass bei Abwesenheit einer Stromerzeugung der Schütz derart geschaltet wird, dass die elektrische Leitung zwischen der oder den Stromerzeugungsanlagen und dem Stromverteilernetz unterbrochen wird. Dies hat den Vorteil, dass Strom gespart werden kann und Bauteile geschont werden.

Die Stromerzeugungsgröße kann eine Stromstärke oder eine von einem oder mehreren Stromerzeugungsmodulen erzeugte Spannung sein. Die Stromerzeugungsgröße kann auch eine andere Reaktion der Stromerzeugungsanlage auf eine stromerzeugende Ursache sein wie etwa eine Rotorgeschwindigkeit einer Windkraftanlage. Die Stromerzeugungsgröße kann auch eine physikalische Größe sein, die ursächlich für die Stromerzeugung durch die Stromerzeugungsanlage ist, wie etwa eine Windstärke oder eine Sonneneinstrahlungsstärke.

Das Kriterium kann beispielsweise durch einen Schwellwert der Stromerzeugungsgröße gegeben sein. Der Schaltzustand des Schützes kann in diesem Fall davon abhängen, ob der Wert der Stromerzeugungsgröße den Schwellwert über- oder unterschreitet. So kann beispielsweise vorgesehen sein, dass bei Überschreiten einer Sonneneinstrahlungsstärke das Schütz geschlossen wird und dass bei Unterschreiten der Sonneneinstrahlungsstärke das Schütz geöffnet wird.

So kann das eingebaute Schütz beispielsweise in der Nacht, wenn keine Solarenergie erzeugt werden kann, Solaranlagen vom Stromverteilernetz trennen. Gleichfalls kann vorgesehen sein, Windkraftanlagen bei Windflaute vom Stromverteilernetz zu trennen. Dies kann Bauteile schonen und die Lebensdauer solcher Anlagen erhöhen.

Der Sensor kann an einem geeigneten Ort installiert sein. Der Sensor kann bei einer der Stromerzeugungsanlagen, bei einer Steuereinheit zum Sanfteinschalten des Transformators, also insbesondere an der Sanfteinschaltvorrichtung, oder an einem anderen Ort, an dem zuverlässige Bedingungen zum Erfassen des Wertes der Stromerzeugungsgröße bestehen, angeordnet sein.

Bei einer weiteren vorteilhaften Ausgestaltung kann vorgesehen sein, dass das Schütz zwischen dem Übergabeschalter und einem Leistungsschalter ausgebildet ist, wobei der Leistungsschalter in der Spannungsleitung zwischen dem Schütz und dem Transformator ausgebildet ist. Ein solcher Leistungsschalter kann vorgesehen sein, um die Stromerzeugungsanlage vor Kurzschlüssen oder anderen Defekten zu schützen. Die Kombination aus Schütz und Leistungsschalter ist besonders vorteilhaft, da einerseits der Leistungsschalter die Netzsicherheit gewährleistet und andererseits das Schütz den Leistungsschalter vor einem Verschleiß schützt, der auftreten würde, wenn der Leistungsschalter die Zuschaltung und Trennung der Stromerzeugungsanlage zu und von dem Stromverteilernetz bewerkstelligen müsste.

Ein solcher Leistungsschalter kann auch in einer Netzspannungs-Schaltanlage, insbesondere Mittelspannungs-Schaltanlage, verbaut sein, welche eine oder auch mehr als eine Stromerzeugungsanlage mit dem Stromverteilernetz verbinden kann.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Merkmale der Ausführungsbeispiele und/oder der zuvor beschriebenen Varianten erfindungsgemäßer Vorrichtungen und Verfahren.

Es zeigt:
- Fig. 1: ein erstes Ausführungsbeispiel einer erfindungsgemäß ausgebildeten Schaltanordnung mit einem Schütz und einer Sanfteinschaltvorrichtung, welche primärseitig an den Transformator angeschlossen ist;
- Fig. 2: ein zweites Ausführungsbeispiel einer erfindungsgemäß ausgebildeten Schaltanordnung mit einer Sanfteinschaltvorrichtung, welche sekundärseitig an den Transformator angeschlossen ist.
- Fig. 3: ein drittes Ausführungsbeispiel einer erfindungsgemäß ausgebildeten Schaltanordnung mit einer Sanfteinschaltvorrichtung, welche sekundärseitig an den Transformator angeschlossen ist und mehr als einen Slave aufweist

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

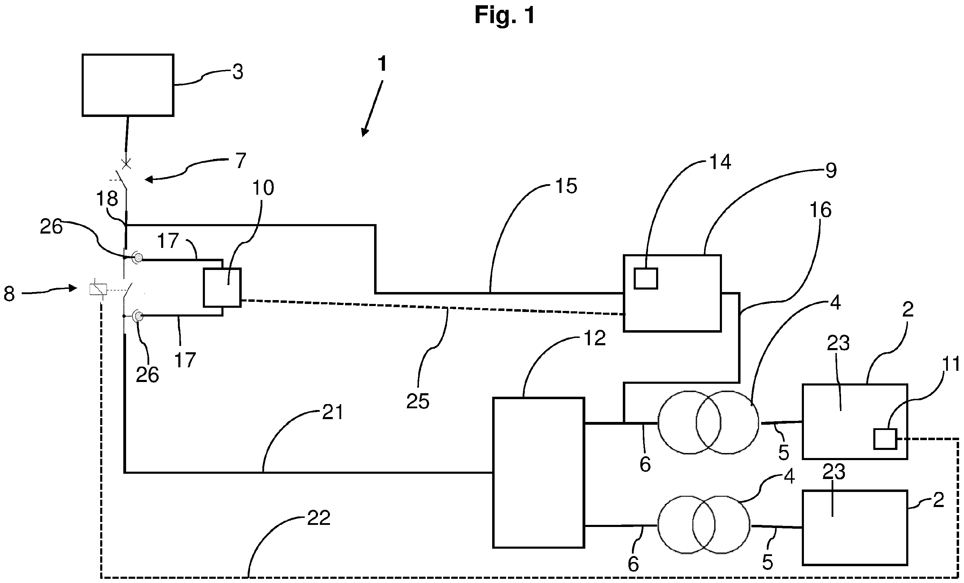

Fig. 1 zeigt eine Schaltanordnung 1 mit einer Sanfteinschaltvorrichtung 9, welche primärseitig an den Transformator 4 angeschlossen ist.

Eine Stromerzeugungsanlage 2, in einer Ausprägung als Solaranlage 23 dargestellt, ist über eine sekundärseitige elektrische Leitung 5 mit einem Transformator 4 verbunden. Der Transformator 4 transformiert die von der Stromerzeugungsanlage 2 erzeugte sekundärseitige Erzeugerspannung auf die primärseitige Netzspannung oberhalb von 1 kV, die insbesondere eine Mittelspannung sein kann. Die Erzeugerspannung kann beispielsweise 400V und die Mittelspannung 20kV betragen.

Eine weitere Stromerzeugungsanlage 2, in diesem Fall ebenfalls als Solaranlage 23 ausgeprägt, ist sekundärseitig über eine weitere elektrische Leitung 5 mit einem weiteren Transformator 4 verbunden. Der Transformator 4 transformiert die sekundärseitige Erzeugerspannung 5 auf die primärseitige Netzspannung.

Eine Sanfteinschaltvorrichtung 9 ist über eine elektrische Leitung 15 mit einer Spannungsleitung 18 an einem Abschnitt zwischen dem Übergabeschalter 7 und dem Schütz 8 verbunden. Der Übergabeschalter 7 ist ein Leistungsschalter. Der Übergabeschalter ist die Schnittstelle zum Stromverteilernetz 3. Mit einer weiteren elektrischen Leitung 16 ist die Sanfteinschaltvorrichtung 9 primärseitig an einem Abschnitt einer elektrischen Leitung 6 angeschlossen, welcher zwischen dem Transformator 4 und dem Schütz 8 liegt. Wie in Fig. 1 gezeigt, kann der Anschlussabschnitt zwischen Transformator 4 und einem weiteren Leitungsschalter angeschlossen sein, der beispielsweise in der Netzspannungs-Schaltanlage 12 verbaut sein kann. Eine Deaktivierungsvorrichtung 14 gehört zur Sanfteinschaltvorrichtung 9 und kann diese Ein- und Ausschalten.

Eine Netzspannungs-Schaltanlage 12 ist mit den Transformatoren 4 über elektrische Leitungen 6 verbunden. Die Netzspannungs-Schaltanlage 12 hat den Zweck, einzelne oder alle Stromerzeugungsanlagen 2 für die Stromeinspeisung freizugeben oder zu trennen. Zugleich schützt die Netzspannungs-Schaltanlage 12 die Netze der Stromerzeugungsanlagen 2.

Weiters ist die Netzspannungs-Schaltanlage 12 über eine elektrische Leitung 21 mit dem Schütz 8 verbunden.

Das Schütz 8 kann die von den Leitungen 18 und 21 gebildete Spannungsleitung öffnen und schließen.

Eine Vorrichtung 10 zum Erkennen der Phasenlage des Stromverteilernetzes 3 ist zwischen den elektrischen Leitungen 18 und 21 ausgebildet und mit diesen über eine elektrische Leitung 17 verbunden. Die Vorrichtung 10 ist daher vor und hinter dem Schütz 8 mit der Spannungsleitung 18, 21 verbunden und kann daher eine Phasenlage des Stromverteilernetzes 3 unmittelbar vor dem Schütz 8 erkennen. Es kann insbesondere vorgesehen sein, dass mit der Vorrichtung 10 eine Phasendifferenz zwischen den Potenzialengemessen werden kann, die unmittelbar vor und unmittelbar nach dem Schütz an der Spannungsleitung 18, 21 anliegen. Die Phasenlage 10 wird über eine Signalleitung 25 an die Sanfteinschaltvorrichtung 9 übermittelt. Diese schaltet sodann den Transformator 9 synchron mit der Phasenlage des Stromverteilernetzes 3 ein.

In den Stromerzeugungsanlagen 2 ist ein Sensor 11 ausgebildet und über eine Signalleitung 22 mit dem Schütz 8 verbunden. Der Sensor 11 der Solaranlage 23 misst die von der Solaranlage erzeugte Spannung. Wird ein Schwellwert einer vorgebebenen Spannung überschritten, wird das Schütz 8 geschlossen. Liegt die gemessene Spannung unterhalb des Schwellwerts, bleibt oder wird das Schütz 8 geöffnet. Der Abgleich des von dem Sensor 11 gemessenen Signals mit dem Schwellwert kann in der Stromerzeugungsanlage 2 erfolgen oder alternativ in einem Steuermodul, das an dem Schütz 8 ausgebildet ist.. Die Schaltung des Schützes 8 erfolgt in entsprechender Weise zur Solaranlage 23 in Abhängigkeit von einem Über- oder Unterschreiten eines vorgegebenen Schwellwerts. Vor einem Abgleich mit dem Schwellwert können die Messsignale noch gefiltert oder anderweitig verarbeitet sein, um beispielsweise zu erreichen, dass ein Trennen der Stromerzeugungsanlage nur bei einem längeren Unter- oder Überschreiten des Schwellwerts erfolgt.

Der Übergabeschalter 7 verbindet die beschriebenen Stromerzeugungsanlagen 2 mit einem Stromverteilernetz 3.

Ein Spannungswandler 26 ist an den zwei Spannungsleitungen am Schütz 8 ausgebildet.

Das Ausführungsbeispiel, das in Fig. 1 dargestellt ist, weist einen Masteranschlussstrang und einen Slaveanschlussstrang auf.

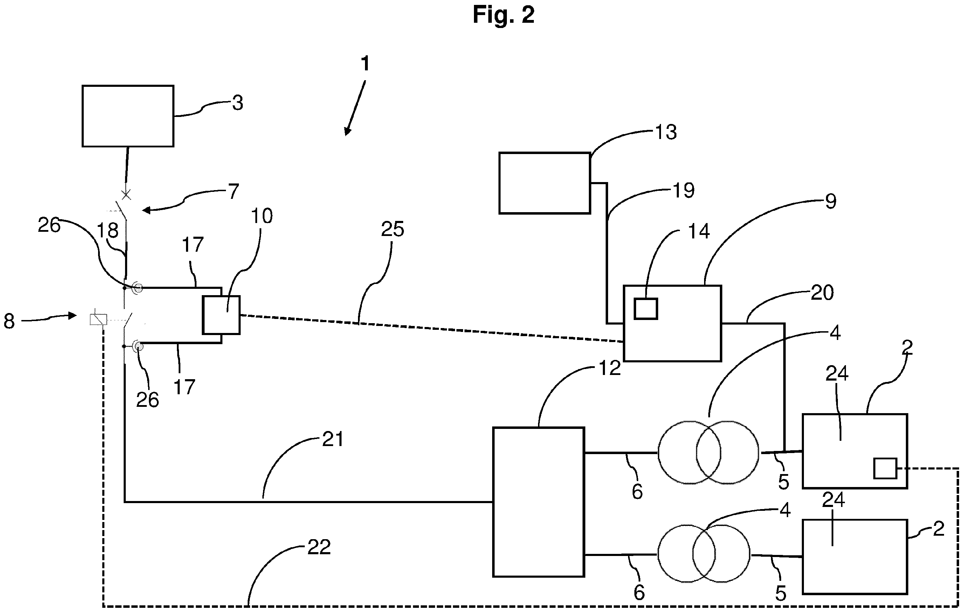

Fig. 2 zeigt ein weiteres Ausführungsbeispiel einer erfindungsgemäßen Schaltanordnung 1 mit einer Sanfteinschaltvorrichtung 9. Die Schaltanordnung 1 ist weitestgehend gleich zu der in Fig. 1 gezeigten Schaltanordnung 1 ausgebildet.

Im Unterschied zu dieser ist bei der Schaltanordnung 1 gemäß in Fig. 2 die Sanfteinschaltvorrichtung 9 nicht primärseitig, sondern sekundärseitig an den Transformator 4 angeschlossen. Hierzu ist die Sanfteinschaltvorrichtung 9 über eine elektrische Leitung 20 zwischen der Stromerzeugungsanlage 2 und dem Transformator 4 verbunden.

Ein weiterer Unterschied zu der in Fig. 1 gezeigten Schaltanordnung 1 besteht darin, dass die Sanfteinschaltvorrichtung 9 nicht über die Spannungsleitung 18, 21 mit Strom versorgt wird, sondern über eine elektrische Leitung 19 von einem Hilfsnetz 13. Das Hilfsnetz 13 ist in dem in Fig. 2 gezeigten Ausführungsbeispiel das öffentliche Niederspannungsnetz. Alternativ könnte die Sanfteinschaltvorrichtung 9 auch von den Stromerzeugungsanlagen 2 versorgt werden, die in diesem Fall das Hilfsnetz 13 bereitstellen.

Ferner sind im Unterschied zu Fig. 1 die Stromerzeugungsanlagen 2 als Windkraftanlagen 24 ausgebildet. Der Sensor 11 misst die Windstärke. Unterschreitet die Windstärke einen vorgegebenen Schwellwert, trennt das Schütz 8 die Stromerzeugungsanlagen 2 vom Stromverteilernetz 3.

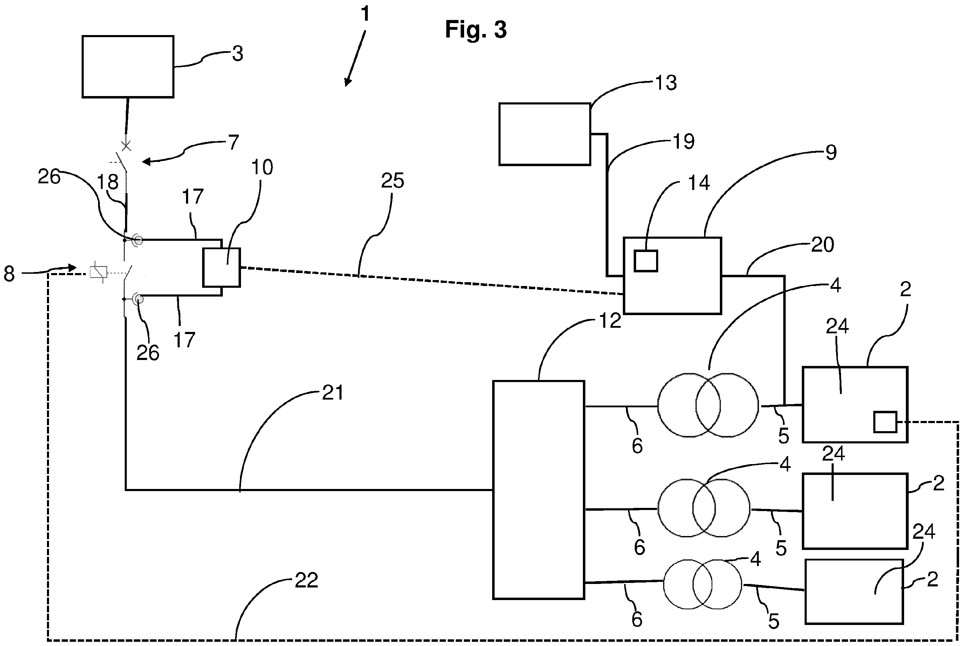

Fig. 3 zeigt ein weiteres Ausführungsbeispiel einer erfindungsgemäßen Schaltanordnung 1 mit einer Sanfteinschaltvorrichtung 9. Die Schaltanordnung 1 ist weitestgehend gleich zu der in Fig. 2 gezeigten Schaltanordnung 1 ausgebildet.

Im Unterschied zu der in Fig. 2 gezeigten Schaltanordnung 1 weist die Schaltanordnung 1 in Fig. 2 insgesamt drei Stromerzeugungsanlagen 2 mit einem Masteranschlussstrang und zwei Slaveanschlusssträngen auf.

Die zuvor genannten Unterschiede in den Ausgestaltungen gemäß der Zeichnungen Fig. 1 bis Fig. 3 können in alternativen Ausführungsbeispielen beliebig miteinander kombiniert werden. So kann beispielsweise die Anzahl von Stromerzeugungsanlagen 2 variieren, die Sanfteinschaltvorrichtung 9 kann primär- oder sekundärseitig an den Transformator 4 des Masteranschlussstrangs angeschlossen sein und die Sanfteinschaltvorrichtung kann aus dem Stromverteilernetz, einem Niederspannungsnetz oder dem Netz der Stromerzeugungsanlagen 2 gespeist sein. Ferner kann die Art der Stromerzeugungsanlagen 2 als Solaranlagen 23, Windkraftanlagen 24 oder einer anderen Art Anlage variieren. Es kann auch vorgesehen sein, dass die angeschlossenen Stromerzeugungsanlagen 2 unterschiedlich sind. Beispielsweise kann eine erste Stromerzeugungsanlage 2 eine Solaranlage 23 und eine zweite Stromerzeugungsanlage 2 eine Windkraftanlage 24 sein.

In den gezeigten Ausführungsbeispielen ist jeweils ein einzelnes Schütz 8 gezeigt, welches sämtliche Stromerzeugungsanlagen 2 vom Stromverteilernetz 3 trennt oder zu diesem zuschaltet. Es kann auch mehr als ein Schütz 8 vorgesehen sein. Dies kann insbesondere dann nützlich sein, wenn mehr als eine Stromerzeugungsanlage 2 vorgesehen ist.

Besonders nützlich kann dies sein, wenn unterschiedliche Arten von Stromerzeugungsanlagen 2 vorgesehen sind. So kann beispielsweise vorgesehen sein, dass ein erstes Schütz 8 eine oder mehrere Stromerzeugungsanlagen 2 schaltet und dass ein zweites Schütz eine andere oder andere Stromerzeugungsanlagen 2 schaltet. Die Schütze 8 sind dann parallelgeschaltet. Es kann auch vorgesehen sein, dass zwei Schütze 8 hintereinander in Reihe geschaltet sind. Dies kann beispielsweise bei einer Parallelschaltung von Schützen 8 zweckmäßig sein, da dann ein Hauptschütz 8 vorhanden ist, mit dem alle Stromerzeugungsanlagen zugleich vom Stromverteilernetz 3 getrennt und diesem wieder zugeschaltet werden können, während die nachgelagerten einzelnen Schütze 8 lediglich Teile der gesamten Anlage trennen und zuschalten. Eine solche Teilzuschaltung kann insbesondere dann nützlich sein, wenn die Teilzuschaltung unterschiedliche Arten von Stromerzeugungsanlagen betrifft. Beispielsweise kann vorgesehen sein, dass eine Solaranlage und eine Windkraftanlage unter unterschiedlichen Bedingungen geschaltet werden sollen, da die Sonneneinstrahlung und die Windstärke nicht streng aneinander gekoppelt sind. Eine kaskadierende Verschaltung der Schütze 8 kann daher die Effizienz der Anlage und die Lebensdauer der Schaltorgane weiter verbessern.

Zusammenfassend betrifft die Erfindung eine Schaltanordnung 1 und ein Verfahren zum Verbinden einer Stromerzeugungsanlage 2 mit einem Stromverteilernetz 3 und zum Trennen von diesem, wobei ein Transformator 4 zum Umtransformieren der sekundärseitigen Erzeugerspannung auf die primärseitige Netzspannung oberhalb von 1kV ausgebildet ist, dadurch gekennzeichnet, dass zwischen dem Transformator 4 und einem Übergabeschalter 7 in der Spannungsleitung 18, 21 ein als Schütz 8 ausgebildeter Stromschalter ausgebildet ist.

### Bezugszeichenliste

1 Schaltanordnung
2 Stromerzeugungsanlage
3 Stromverteilernetz
4 Transformator
5 Sekundärseitige elektrische Leitung
6 Primärseitige elektrische Leitung
7 Übergabeschalter
8 Schütz
9 Sanfteinschaltvorrichtung
10 Mittel zum Erkennen der Phasenlage
11 Sensor
12 Netzspannungs-Schaltanlage
13 Hilfsnetz
14 Deaktivierungsvorrichtung
15 Elektrische Leitung
16 weitere Elektrische Leitung
17 weitere Elektrische Leitung
18 Spannungsleitung zwischen Schütz und Übergabeschalter
19 weitere Elektrische Leitung 9 und 13
20 Elektrische Leitung
21 Spannungsleitung zwischen 12 und 8
22 Signalleitung
23 Solaranlage
24 Windkraftanlage
25 Signalleitung
26 Spannungswandler

## Patentansprüche

1. Schaltanordnung (1) zum Zuschalten einer mit einer Erzeugerspannung betriebenen Stromerzeugungsanlage (2), insbesondere einer Windkraft-(24) und/oder Photovoltaikanlage (23), zu einem mit einer Netzspannung oberhalb von 1 kV, insbesondere einer Mittelspannung, betriebenen Stromverteilernetz (3), insbesondere Mittelspannungsnetz, und zum Trennen von diesem, wobei ein Transformator (4) zum Umtransformieren der sekundärseitigen Erzeugerspannung (5) auf die primärseitige Netzspannung (6) ausgebildet ist und wobei primärseitig der Transformator (4) über eine Spannungsleitung (18, 21), insbesondere Mittelspannungsleitung, mit einem Übergabeschalter (7), der die Stromerzeugungsanlage (2) mit dem Stromverteilernetz (3) verbindet, verbunden ist, **dadurch gekennzeichnet, dass** zwischen dem Transformator (4) und dem Übergabeschalter (7) in der Spannungsleitung (18, 21) ein als Schütz (8) ausgebildeter Stromschalter (8) ausgebildet ist.

2. Schaltanordnung nach Anspruch 1, **dadurch gekennzeichnet, dass** eine Sanfteinschaltvorrichtung (9) zum Sanfteinschalten des Transformators (4) ausgebildet ist.

3. Schaltanordnung nach Anspruch 2, **dadurch gekennzeichnet, dass** die Sanfteinschaltvorrichtung (9) über eine Stromleitung mit der Spannungsleitung, insbesondere Mittelspannungsleitung, verbunden ist, insbesondere wobei die Sanfteinschaltvorrichtung (9) sekundärseitig oder primärseitig an den Transformator (4) angeschlossen ist.

4. Schaltanordnung nach einem der Ansprüche 2 oder 3, **dadurch gekennzeichnet, dass** die Sanfteinschaltvorrichtung (9) zum Anschluss an ein Hilfsnetz (13) ausgebildet ist, wobei das Hilfsnetz (13) mit einer Spannung unterhalb der Mittelspannung, vorzugsweise mit der Erzeugerspannung, betrieben wird, insbesondere wobei die Sanfteinschaltvorrichtung (9) sekundärseitig an den Transformator (4) angeschlossen ist.

5. Schaltanordnung (10) nach einem der Ansprüche 1 bis 4, **dadurch gekennzeichnet, dass** Mittel zum Erkennen der Phasenlage der Netzspannung des Stromverteilernetzes (3), insbesondere Mittelspannungsnetzes, insbesondere zum Erkennen einer Phasendifferenz an Anschlüssen des Schützes (8), ausgebildet sind.

6. Schaltanordnung (1) nach einem der vorangehenden Ansprüche, **dadurch gekennzeichnet, dass** das Schütz (8) zwischen dem Übergabeschalter (7) und einem Leistungsschalter ausgebildet ist, wobei der Leistungsschalter in der Spannungsleitung (18, 21), insbesondere Mittelspannungsleitung, zwischen dem Schütz (8) und dem Transformator (4) ausgebildet ist.

7. Verfahren zum Zuschalten einer Stromerzeugungsanlage (2), insbesondere einer Windkraft-(24) und/oder eine Solaranlage (23) zu einem mit einer Netzspannung oberhalb von 1 kV, insbesondere Mittelspannung, betriebenen Stromverteilernetz, insbesondere Mittelspannungsnetz, und zum Trennen von diesem, wobei eine Erzeugerspannung der Stromerzeugungsanlage (2) mittels eines Transformators (4) auf die Netzspannung, insbesondere Mittelspannung, umtransformiert wird und wobei primärseitig der Transformator (4) über eine Spannungsleitung (18, 21), insbesondere Mittelspannungsleitung, mit einem Übergabeschalter (7), der die Stromerzeugungsanlage (2) mit dem Stromverteilernetz (3), insbesondere Mittelspannungsnetz, verbindet, verbunden ist, **dadurch gekennzeichnet, dass** zum Zuschalten der Stromerzeugungsanlage (2) zum Stromverteilernetz (3), insbesondere Mittelspannungsnetz, und zum Trennen der Stromerzeugungsanlage (2) von dem Stromverteilernetz (3), insbesondere Mittelspannungsnetz, ein als Schütz (8) ausgebildeter und zwischen dem Übergabeschalter (7) und dem Transformator (4) ausgebildeter Stromschalter (8) geschaltet wird.

8. Verfahren nach dem vorangehenden Anspruch, **dadurch gekennzeichnet, dass** vor dem Zuschalten der Stromerzeugungsanlage (2) zum Stromverteilernetz (3), insbesondere Mittelspannungsnetz, der Transformator (4) mittels einer Sanfteinschaltvorrichtung (9) sanfteingeschaltet wird.

9. Verfahren nach einem der vorangehenden Ansprüche, **dadurch gekennzeichnet, dass** nach dem Zuschalten der Stromerzeugungsanlage (2) die Sanfteinschaltvorrichtung (9) deaktiviert wird.

10. Verfahren nach einem der vorangehenden Ansprüche, **dadurch gekennzeichnet, dass** eine Phasenlage des Stromverteilernetzes (3), insbesondere Mittelspannungsnetz, ermittelt wird und dass der Transformator (4) synchron mit der Phasenlage sanfteingeschaltet wird.

11. Verfahren nach einem der vorangehenden Ansprüche, **dadurch gekennzeichnet, dass** die Sanfteinschaltvorrichtung (9) aus einem Strom gespeist wird, der zwischen dem Übergabeschalter (7) und dem als Schütz (8) ausgebildeten Stromschalter abgegriffen wird.

12. Verfahren nach einem der vorangehenden Ansprüche, **dadurch gekennzeichnet, dass** die Sanfteinschaltvorrichtung (9) aus einem Hilfsnetz (13) gespeist wird, das eine Spannung unterhalb der Mittelspannung, vorzugsweise die Erzeugerspannung, aufweist.

13. Verfahren nach einem der vorangehenden Ansprüche, **dadurch gekennzeichnet, dass** ein Wert einer Stromerzeugungsgröße der Stromerzeugungsanlage(2) mithilfe eines Sensors (11) gemessen wird und dass das Schütz (8) in Abhängigkeit von einem Kriterium geschaltet wird, wobei das Kriterium den gemessenen Wert einschließt.
